# EUROPÄISCHE PATENTANMELDUNG

(11) **EP 1 854 664 A2**
(43) Veröffentlichungstag der Anmeldung: **14.11.2007**
(21) Anmeldenummer: 07108187.1
(22) Anmeldetag: 14.05.2007
(51) Int. Cl.: B60P 7/08

(54) **T-förmige Befestigungsschiene und dazugehöriges Befestigungselement**

(30) Priorität: 12.05.2006 DE 102006022712
(71) Anmelder: Wagon Automotive FKT GmbH, 85104 Pförring (DE)
(72) Erfinder: Feigl, Claus-Michael, 85055 Ingolstadt (DE)
(74) Vertreter: Bioret, Ludovic

(57) **Zusammenfassung**

Eine Befestigungsschiene (1) zur Halterung und/oder Sicherung von Gegenständen in einem Laderaum eines Kraftfahrzeuges ist in dem Laderaum ortsfest anordenbar. In der Schiene (1) kann ein Befestigungselement (2) verschieblich und feststellbar gelagert werden. Die Schiene (1) weist ein weitgehend T-förmiges Profil auf. Ein Befestigungselement (2) zur Halterung und/oder Sicherung von Gegenständen in einem Laderaum eines Kraftfahrzeuges kann an einer in dem Laderaum ortsfest angeordneten Schiene (1) verschieblich und feststellbar gelagert werden. Das Befestigungselement (2) kann die Schiene (1) von außen umgreifen.

## Beschreibung

Die vorliegende Erfindung betrifft eine Befestigungsschiene zur Halterung und/oder Sicherung von Gegenständen in einem Laderaum eines Kraftfahrzeuges, welche in dem Laderaum ortsfest anordenbar ist. Weiterhin betrifft die Erfindung ein Befestigungselement, welches an der Schiene verschieblich und feststellbar gelagert ist.

Derartige Schienen und Befestigungselemente sind im Stand der Technik allgemein bekannt und sind im Lade- oder Kofferraum eines Kraftfahrzeuges starr befestigt. In bekannten Systemen zur Ladungssicherung sind vorzugsweise zwei Schienen in Fahrzeuglängsrichtung parallel zueinander im Fahrzeug befestigt. In die Schienen sind verschiedene Befestigungselemente einsetzbar und in den Schienen in Längsrichtung verschiebbar sowie arretierbar. Die in die Schiene einsetzbaren Befestigungselemente können als Lastösen oder auch mit verschiedenen starren oder flexiblen Haltearmen oder Gurten ausgebildet sein.

Die DE 101 49 186 B4 beschreibt eine gattungsgemäße Befestigungsschiene, welche zur Aufnahme einer Lastöse ausgebildet ist. Die Befestigungsschiene weist einen im wesentlichen C-förmigen Querschnitt auf, wobei die umgebogenen Schenkel des C-förmigen Profils in entsprechende Nuten der Lastöse eingreifen, so dass diese formschlüssig mit der Schiene verbunden ist. Die Lastöse ist hierdurch in der Schiene in Längsrichtung verschiebbar gelagert und kann in einer idealen Fixierposition arretiert werden. Die Lastöse weist hierzu ein Sperrelement auf, das in Bohrungen der Schiene eingreifen kann. Wirken jedoch auf die Verzurröse größere Kräfte ein, besteht die Gefahr, dass die Schenkel des C-förmigen Profils unter der Belastung aufgebogen werden, so dass die Lastöse nicht mehr sicher in der Schiene geführt ist.

Aufgabe der vorliegenden Erfindung ist es, ein Befestigungselement und eine Befestigungsschiene vorzuschlagen, in welcher das Befestigungselement auch unter Belastung sicher geführt ist.

Die Aufgabe wird gelöst mit den Merkmalen der unabhängigen Ansprüche.

Eine Befestigungsschiene zur Halterung und/oder Sicherung von Gegenständen ist in einem Laderaum eines Kraftfahrzeuges ortsfest anordenbar. An der Schiene ist ein Befestigungselement verschieblich und feststellbar gelagert. Erfindungsgemäß weist die Schiene ein weitgehend T-förmiges Profil auf. Das an der Schiene gelagerte Befestigungselement ist derart ausgebildet, dass es das T-förmige Profil der Schiene von außen umgreift. Das Befestigungselement ist hierdurch ebenso wie bei den U-förmigen oder C-förmigen Schienen des Standes der Technik in Längsrichtung verschieblich und feststellbar gelagert, wobei jedoch durch das T-förmige Profil ein Aufbiegen der Schiene wirksam verhindert werden kann. Durch die T-förmige Ausgestaltung des Schienenprofils ist es möglich, das Profil in den beanspruchten Bereichen stärker auszugestalten, ohne die Funktionalität und die optische Erscheinung der Schiene zu beeinträchtigen. Durch die T-förmige Ausgestaltung kann die Schiene mit einer besonders geringen Bauhöhe von weniger als 20 mm ausgeführt werden. Die Schiene kann hierdurch auf besonders einfache Weise flächenbündig zu der Oberfläche des Laderaumes gestaltet werden.

Ein Aufbiegen der Schiene wird weiterhin vorteilhaft durch das die Schiene von außen umgreifende Befestigungselement vermindert. Es kann hierbei das Befestigungselement selbst oder bevorzugt lediglich ein Sperrelement des Befestigungselements die Schiene außen umgreifen.

Bei der erfindungsgemäßen Befestigungsschiene bildet die Oberseite eines oberen Querbalkens des T- Profils der Schiene eine Lauffläche für das Befestigungselement. Die Lauffläche ist im Gegensatz zu einem offenen C-
oder U-Profil geschlossen, so dass sie sich besonders harmonisch in das Kraftfahrzeug einfügt. Ebenso können hierdurch Verschmutzungen vermieden werden.

Eine vorteilhafte Weiterbildung der Erfindung sieht vor, dass die Schiene Verrastungsöffnungen aufweist, in welche ein Sperrelement des Befestigungselementes verrastbar ist. Hierdurch ist eine besonders sichere Festlegung des Ladegutes möglich. Anstelle der Verrastung durch ein Sperrelement ist es jedoch auch möglich, das Befestigungselement lediglich mit der Schiene zu verklemmen. Auch hierdurch kann eine gute Sicherung des Ladegutes erreicht werden.

Vorzugsweise sind die Verrastungsöffnungen an dem oberen Querbalken des T-Profils angeordnet. Insbesondere ist es hierbei vorteilhaft, wenn die Verrastungsöffnungen an der der Lauffläche gegenüberliegenden Seite des Querbalkens angeordnet sind. Bei einer in das Fahrzeug eingebauten Schiene wird hierdurch eine geschlossene Oberfläche erreicht, die Verrastungsöffnungen liegen vorteilhaft verdeckt. Durch die Anordnung der Verrastungsöffnungen an der Unterseite des Querbalkens kann die Verrastung des Sperrelementes besonders einfach realisiert werden. Es ist jedoch auch möglich, die Verrastungsöffnungen am Fuß des T-Profils oder direkt in der Lauffläche an der Oberseite des Querbalkens vorzusehen.

Eine besonders vorteilhafte Weiterbildung der Erfindung sieht vor, dass die Verrastungsöffnungen in einem an der Schiene anordenbaren Lochstreifen angeordnet sind. Vorteilhaft ist es auch, wenn jeweils zwei Lochstreifen an der Schiene angeordnet sind, welche sich beidseits des Fußes des T-Profils an der der Lauffläche gegenüberliegenden Seite des Querbalkens befinden.

Besonders vorteilhaft ist es, wenn die Lochstreifen aus Stahl ausgeführt sind, da dieser die Belastungen besonders gut aufnehmen kann. Die Schiene kann hierdurch unabhängig von den Lochstreifen in einem anderen Material ausgeführt werden. Es ist jedoch auch möglich, die Verrastungsöffnungen nicht in separaten Lochstreifen, sondern direkt in dem T-Profil der Schiene vorzusehen.

Eine andere vorteilhafte Ausführung der Erfindung sieht vor, dass das T-förmige Profil der Schiene ein Aluminiumprofil ist. Durch Verwendung eines Aluminiumprofils kann auf einfache Weise eine ansprechende Gestaltung der Schiene erreicht werden und Korrosionsschäden vermieden werden.

Gemäß einer anderen vorteilhaften Ausführungsform der Erfindung kann das T-förmige Profil der Schiene jedoch auch als Blechbiegeteil ausgeführt sein. Dieses ist besonders kostengünstig herstellbar und kann durch entsprechende Beschichtungen ebenfalls ansprechend gestaltet und auf den Fahrzeuginnenraum abgestimmt werden.

Daneben ist es vorteilhaft, wenn das T-förmige Profil flächenbündig zu einer Bodenfläche oder Seitenwand des Laderaumes anordenbar ist. Sind entsprechende Ausnehmungen in der Boden- oder Seitenfläche des Laderaumes vorgesehen, ist dies auf besonders einfache Weise zu erreichen. Zugleich erleichtert die flächenbündige Anordnung das Beladen des Laderaumes.

Eine andere vorteilhafte Weiterbildung der Erfindung sieht vor, dass an dem Fuß des T-förmigen Profils Fortsätze angeformt sind. Sind diese rechtwinklig zu dem Fuß des T-Profils angeordnet, verbreitern sie die Fußfläche des T-Profils und können somit als Auflagefläche für die Schiene dienen. Für die Anordnung von Abdeck- oder Dichtelementen ist es weiterhin vorteilhaft, wenn die Fortsätze sich auch parallel zu dem Fuß des T-Profils nach oben erstrecken.
Eine andere vorteilhafte Weiterbildung der Erfindung sieht vor, dass der Schiene flexible Abdeckungen zugeordnet sind, welche einen Spalt zwischen der Schiene und einer Bodenfläche oder Seitenwand des Laderaumes überdecken. Die flexiblen Abdeckungen überdecken den verbleibenden Spalt zwischen der Schiene und der Wand oder dem Boden des Laderaumes, welcher für die Außenumgreifung der Schiene nötig ist. Hierdurch kann eine nahezu vollständig geschlossene Oberfläche in dem Laderaum erreicht werden. Die flexible Abdeckung ist beispielsweise ein gummiartiges Extrusionsprofil oder ein Schaumhohlprofil.

Vorzugsweise sind die flexiblen Abdeckungen an Fortsätzen des T-förmigen Profils angeordnet. Die Schiene kann hierdurch als komplette Einheit vormontiert und in das Fahrzeug verbaut werden.

Weiterhin ist es vorteilhaft, wenn die Schiene wenigstens eine, vorzugsweise an einem Ende der Schiene angeordnete, Austrittsöffnung für Befestigungselemente aufweist. Hierdurch ist es möglich, Befestigungselemente auch nach der Montage der Schiene in das Fahrzeug je nach Bedarf in die Schiene einzusetzen oder aus dieser zu entfernen. Die Schiene kann zumindest an einem Ende auch mit einer Endkappe versehen sein, wobei die Austrittsöffnung für die Befestigungselemente in der Endkappe angeordnet ist. Die Endkappe weist den selben T-förmigen Querschnitt wie die Schiene auf und kann ebenfalls mit entsprechenden Fortsätzen versehen sein.

Vorzugsweise weist die Befestigungsschiene weiterhin ein Verschlusselement zum Verschließen der Austrittsöffnung der Schiene auf, um wieder eine geschlossene Oberfläche zu schaffen und zugleich ein unbeabsichtigtes Entfernen des Befestigungselementes aus der Schiene zu verhindern.

Um auch hier eine optisch ansprechende Erscheinung zu erreichen ist das Verschlusselement weitgehend oberflächenbündig mit der Schiene ausgeführt.
Gemäß einer Weiterbildung der Erfindung ist das Verschlusselement durch ein Scharnier mit der Schiene verbunden, so dass es zum Freigeben der Austrittsöffnung von der Schiene abgeklappt werden kann und zum Schließen der Austrittsöffnung wieder an die Schiene angeklappt wird.

Gemäß einer vorteilhaften Weiterbildung der Erfindung ist das Verschlusselement zugleich als Verzurröse für Ladegut ausgebildet.

Eine andere vorteilhafte Weiterbildung des Erfindung sieht vor, dass das Verschlusselement federbelastet an der Schiene angeordnet ist. Die Austrittsöffnung kann hierbei durch Druck auf das Verschlusselement freigegeben werden, wobei das Verschlusselement in die Schiene gedrückt wird. Nach Einsetzen oder Entnahme des Befestigungselements aus der Schiene wird die Austrittsöffnung durch die Federkraft automatisch wieder verschlossen.

Eine besonders vorteilhafte Weiterbildung der Erfindung sieht vor, dass das Verschlusselement eine Betätigungsvorrichtung aufweist, welche durch das Befestigungselement betätigbar ist. Zum Entfernen eines Befestigungselementes aus der Schiene muss das Befestigungselement lediglich in Richtung der Austrittsöffnung bewegt werden. Die Betätigungsvorrichtung wird hierbei automatisch durch das Befestigungselement betätigt, wobei die Austrittsöffnung freigegeben wird.

Eine weitere vorteilhafte Weiterbildung der Erfindung sieht vor, dass die Schiene zumindest im Bereich der oberen Lauffläche eine dekorative und/oder kratzfeste Beschichtung aufweist.

Vorteilhaft ist es weiterhin, wenn die Verrastung des Sperrelementes durch Druck auf das Sperrelement und/oder Hochziehen des Sperrelementes lösbar ist. Das Befestigungselement ist hierdurch besonders einfach bedienbar und in der Schiene verschiebbar. Das Lösen der Verrastung kann hierbei durch Betätigung des Sperrelementes selbst oder indirekt durch eine Betätigungsvorrichtung erfolgen.

Daneben ist es vorteilhaft, wenn die Schiene Sollknickstellen aufweist, so dass im Falle eines Auffahrunfalls verhindert wird, dass sich die Schienen in den Fahrgastraum schieben. Vorzugsweise sind die Sollknickstellen als Topfbohrungen ausgebildet, da diese besonders einfach in ein Aluminiumprofil einzubringen sind.

Weitere Vorteile der Erfindung werden anhand der nachfolgend ausgeführten Ausführungsbeispiele dargestellt. Es zeigen:
- Figur 1: Eine erfindungsgemäße Befestigungsschiene mit einer Schiene mit T-förmigem Profil mit einem in die Schiene eingesetzten Befestigungselement in einer Schnittdarstellung,
- **Figur 2**: eine Detailansicht der Schiene mit Lochstreifen,
- **Figur 3**: eine Darstellung eines Schienenprofils mit Fortsätzen als Auflagefläche für die Schiene,
- **Figur 4**: eine Detailansicht eines Verschlusselements, welches mit einem Scharnier an der Schiene angeordnet ist,
- **Figur 5**: ein Verschlusselement mit einer Betätigungsvorrichtung,
- **Figur 6**: eine Endkappe für die Schiene mit einem Verschlusselement,
- **Figur 7**: eine weitere Endkappe mit sich nach oben erstreckenden Fortsätzen und
- **Figur 8**: eine flexible Abdeckung, welche als Hohlprofil ausgeführt ist.

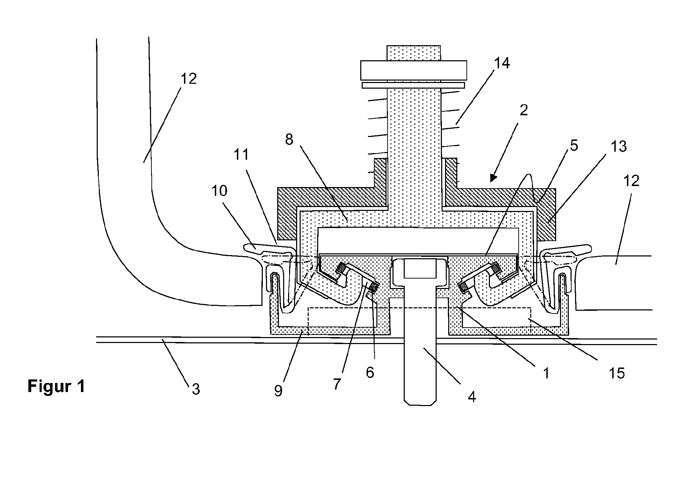

Figur 1 zeigt eine erfindungsgemäße Befestigungsschiene 1 mit einem weitgehend T-förmigen Profil sowie einem in die Schiene 1 eingesetzten Befestigungselement 2. Als Befestigungselemente 2 sind Verzurrösen, Gurtroller oder weiterer Befestigungsvorrichtungen denkbar, wobei diese auch miteinander kombiniert werden können oder mehrere Befestigungselemente 2, welche verschiedenartig ausgestattet sind, in die Schiene 1 eingesetzt werden können. Erfindungsgemäß weist die Schiene 1 im Querschnitt ein T-förmiges Profil auf und wird von dem Befestigungselement 2 außen umgriffen. Die Schiene 1 ist beispielsweise mit Befestigungsschrauben 4 fest in einem Laderaum eines Kraftfahrzeuges angeordnet. Vorliegend ist die Schiene 1 an dem Boden 3 des Kraftfahrzeuges angeordnet, ebenso ist es jedoch möglich, eine derartige Schiene 1 an einer Seitenwand eines Laderaumes anzuordnen. Vorteilhaft bei der erfindungsgemäßen Ausgestaltung der Schiene 1 ist es, dass die Schraubenköpfe der Befestigungsschraube 4 komplett in die Schiene 1 versenkt werden können. Durch die erfindungsgemäße Außenumgreifung des Schienenprofils können die Kräfte in besonders günstiger Weise in das Profil eingeleitet werden. Vorteilhaft ist es weiterhin, dass das T-förmige Profil in belasteten Bereichen stärker ausgeführt werden kann, so dass es die Belastungen besonders gut aufnehmen kann.

In der vorliegenden Darstellung bildet die Oberseite eines oberen Querbalkens des T-Profils eine Lauffläche 5 für das Befestigungselement 2. Auf der Unterseite des oberen Querbalkens des T-Profils sind gemäß der vorliegenden Darstellung zwei Lochstreifen 6 angeordnet, welche in entsprechende Nuten des T-Profils einsetzbar sind und in welchen die Verrastungsöffnungen 7 für ein Sperrelement 8 des Befestigungselementes 2 angeordnet sind.

Durch die erfindungsgemäße Anordnung der Verrastungsöffnungen 7 an der der Lauffläche 5 gegenüberliegenden Seite kann eine vorteilhafte Trennung von Lauffläche 5 und Verrastfläche erreicht werden. Das Befestigungselement 2 ist hierdurch besonders leicht und komfortabel bedienbar, da die Lauffläche 5 keine Durchbrechungen für die Verrastungsöffnungen 7 aufweist. Zugleich kann hierdurch eine optisch ansprechende geschlossene Oberfläche erreicht werden. Weiterhin ist es durch die Trennung von Lauffläche 5 und Verrastungsöffnungen 7 möglich, den Lochstreifen 6 unabhängig von der Schiene 1 aus einem für die Aufnahme der Belastungen günstigen Material, vorzugsweise Stahl, herzustellen. Darüber hinaus ist es möglich, verschiedene Lochstreifen 6, welche sich in der Anordnung ihrer Verrastungsöffnungen 7 unterscheiden, in die Schiene 1 einzusetzen.

Die Schiene 1 ist vorzugsweise als Aluminiumprofil hergestellt, so dass sich hierdurch ein besonders hochwertiges Erscheinungsbild ergibt. Alternativ ist es jedoch auch möglich, das T-förmige Profil als Blechbiegeteil herzustellen, welches besonders kostengünstig herstellbar ist. Besonders günstig kann das Blechbiegeteil hergestellt werden, wenn es einteilig aus einem Blechstreifen durch mehrmaliges Umbiegen der Seitenränder gefertigt wird.

Gemäß der vorliegenden Darstellung werden an dem Fuß des T-förmigen Profils der Schiene 1 Fortsätze 9 angeformt, welche der Auflage der Schiene 1 auf dem Fahrzeugboden 3 sowie auch der Befestigung weiterer Elemente der Schiene dienen können. Die Fortsätze 9 sind derart angeordnet, dass sie sich auch parallel zu dem Fuß des T-förmigen Profils nach oben erstrecken, und sind zur Aufnahme flexibler Abdeckungen 10 vorgesehen. Die flexiblen Abdeckungen 10 sind vorzugsweise als Extrusionsprofil gefertigt und erstrecken sich über die gesamte Länge der Schiene 1.

Um im Falle eines Auffahrunfalls zu verhindern, dass die Schienen 1 in den Fahrgastraum geschoben werden und hierdurch Verletzungen der Insassen herbeiführen, weist die Schiene 1 mehrere Sollknickstellen auf. Diese sind vorzugsweise als Topfbohrungen 15, vorliegend durch die gestrichelte Linie angedeutet, ausgeführt. Ist die Schiene 1 ein Aluminiumprofil, können diese in einfacher Weise spanend aus der Schiene 1 herausgearbeitet werden.

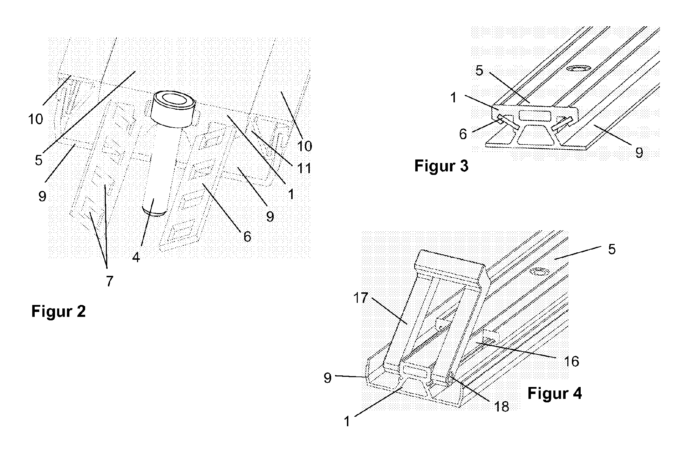

Figur 2 zeigt eine Detailansicht der Schiene 1 mit an ihr angeordneten Lochstreifen 6. Weiterhin ist in Figur 2 die Befestigung der flexiblen Abdeckungen 10 dargestellt. Die Abdeckungen 10 sind hierbei auf ein nach oben weisendes Ende der Fortsätze 9 aufgesteckt und überdecken einen Spalt 11, welcher in montiertem Zustand der Schiene 1 zwischen Verkleidungen 12 des Laderaumes und der Schiene 1 verbleibt. Hierdurch ergibt sich eine optisch geschlossene Oberfläche. Zugleich können durch die flexiblen Abdeckungen 10 Toleranzen der einzelnen Bauteile ausgeglichen werden. In der Darstellung der Figur 2 ist kein Befestigungselement 2 in die Schiene 1 eingesetzt, so dass sich die Abdeckungen 10 an das Schienenprofil anlegen und den Spalt 11 verschließen.

Im Bereich eines in die Schiene 1 eingesetzten Befestigungselementes 2 werden die flexiblen Abdeckungen 10 durch das Befestigungselement 2 zur Seite gedrückt, wie in Figur 1 dargestellt. In einem Bereich außerhalb des Befestigungselementes 2 legen sich die flexiblen Abdeckungen 10 hingegen an die Schiene 1 an, wie in der strichpunktierten Darstellung der Abdeckungen 10 angedeutet.

Das Befestigungselement 2 besteht gemäß der Darstellung der Figur 1 aus einem Gleitelement 13 und einem Sperrelement 8. Das Gleitelement 13 liegt mit seiner Unterseite auf der Lauffläche 5 der Schiene 1 auf und umgreift die Schiene 1 von außen. Hierdurch wird eine formschlüssige Verbindung zwischen Schiene 1 und Befestigungselement 2 hergestellt. Mittig weist das Gleitelement 13 in seinem Inneren eine Ausnehmung auf, in welcher das Sperrelement 8 angeordnet ist, welches die Schiene 1 ebenfalls umgreift. Das Sperrelement 8 ist in den Verrastungsöffnungen 7 verrastbar und wird durch eine Feder 14, welche sich an dem Gleitelement 13 abstützt, in der Verrastungsposition gehalten. Durch Druck auf das Sperrelement 8 entgegen der Feder 14 kann die Verrastung gelöst werden und das Befestigungselement 2 in der Schiene 1 verfahren werden. Es ist ebenso möglich, die Verrastung des Sperrelementes 8 durch ein Hochziehen des Sperrelementes 8 zu lösen, oder die Verrastung mittels einer Betätigungsvorrichtung zu lösen.

Das Befestigungselement 2 ist vorzugsweise mit einer hier nicht dargestellten Abdeckung versehen, so dass die Funktionsteile des Befestigungselementes 2 nicht in Erscheinung treten.

Figur 3 zeigt eine Darstellung eines Schienenprofils mit Fortsätzen 9 als Auflagefläche für die Schiene 1. Im Gegensatz zu den Ausführungen der Figuren 1 und 2 erstrecken sich hier die Fortsätze 9 lediglich rechtwinklig zu dem Fuß des T-Profils, um eine Auflagefläche für die Schiene 1 zu bilden. Flexible Abdeckungen 10 zur Abdeckung des Spaltes 11 können in diesem Fall beispielsweise an Verkleidungsteilen 12 des Fahrzeuges angeordnet werden. Fortsätze 9 zur Bildung einer Auflagefläche sind jedoch nicht unbedingt erforderlich, die erfindungsgemäße Schiene 1 kann auch nur aus dem T-förmigen Profil bestehen. Insbesondere wenn der Fuß der T-Profils nach unten hin verbreitert ausgeführt ist, wie in Figur, 3 dargestellt, kann das Profil auch ohne die Fortsätze 9 ausgebildet werden.

Ein Verschlusselement 17 zum Verschluss von Austrittsöffnungen 16 der Schiene 1 zeigt Figur 4. Gemäß der vorliegenden Darstellung ist an einem Ende der Schiene 1 eine Austrittsöffnung 16 für das Befestigungselement 2 angeordnet. Eine derartige Austrittsöffnung 16 kann jedoch auch in einem mittleren Bereich der Schiene 1 angeordnet sein, oder es können mehrere Austrittsöffnungen 16 in der Schiene 1 angeordnet sein. Die Austrittsöffnung 16 kann in einfacher Weise aus der Schiene 1 gefräst sein, sofern es sich um ein Aluminiumprofil handelt.

Vorliegend ist die Austrittsöffnung 16 durch ein Verschlusselement 17 abgedeckt, welches mit einem Scharnier 18 an der Schiene 1 befestigt ist. Zum Einsetzen eines Befestigungselementes 2 kann das Verschlusselement 17 nach oben geklappt werden wie dargestellt und gibt hierdurch die Austrittsöffnung 16 frei. Anschließend wird das Verschlusselement 17 wieder zurückgeklappt und bedeckt die Austrittsöffnung 16 wieder. Das Verschlusselement 17 ist dann weitgehend oberflächenbündig mit der Schiene 1 angeordnet.

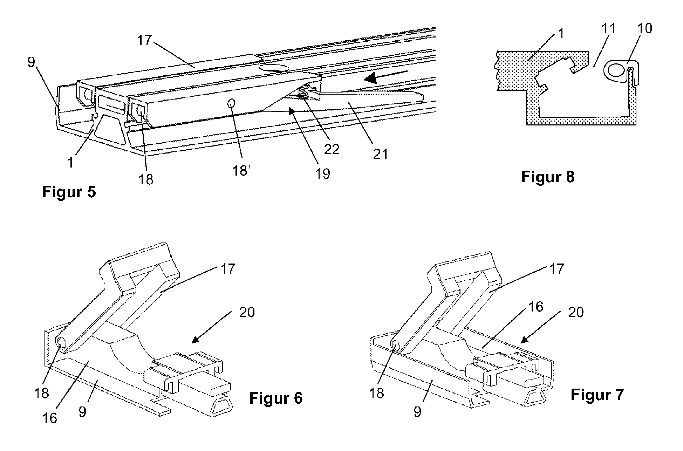

Ein derartiges Verschlusselement 17 kann jedoch anstelle der Schiene 1 auch in einer Endkappe 20 der Schiene 1 angeordnet sein (Figuren 6 und 7). Die Endkappe 20 weist zumindest an einem Ende den gleichen Querschnitt wie die Schiene 1 auf und ist an diese ansteckbar. Die Austrittsöffnungen 16 für die Befestigungselemente 2 sind in diesem Fall in den Endkappen 20 angeordnet. Die Endkappen können beispielsweise als Aluminiumgussteile ausführt sein, andere Materialien sind jedoch ebenfalls denkbar. Die Verschlusselemente 17 sind wie zuvor beschrieben durch Scharniere 18 mit der Endkappe 20 verbunden und schließen in eingeklapptem Zustand weitgehend flächenbündig mit der Schiene 1 bzw. der Endkappe 20 ab. Figur 6 zeigt eine Endkappe 20, welche ebenso wie die Schiene der Figur 3 Fortsätze 9 lediglich im Fußbereich als Auflagefläche aufweist. In der Darstellung der Figur 7 sind die Fortsätze 9 zusätzlich auch nach oben gezogen, so dass eine flexible Abdeckung 10 an Ihnen angeordnet werden kann. Die Abdeckung 10 kann sich somit über die gesamte Länge der Schiene 1 erstrecken, wodurch ein einheitliches Erscheinungsbild erreicht wird.

Figur 5 zeigt eine andere Ausführung eines Verschlusselements 17. Das Verschlusselement 17 ist ebenfalls mit einem Scharnier 18 an der Schiene 1 befestigt, verfügt jedoch zusätzlich über eine Betätigungsvorrichtung 19 zur Freigabe der Austrittsöffnung 16. Die Betätigungsvorrichtung 19 ist durch Verschieben des Befestigungselementes 2 (hier nicht dargestellt) in der Schiene 1 betätigbar. Die Betätigungsvorrichtung 19 wird durch eine Rampe 21 und eine Feder 22 gebildet und ist mit den Verschlusselement 17 durch ein weiteres Scharnier 18' verbunden. Wird das Befestigungselement 2 in Pfeilrichtung in der Schiene 1 verschoben, wird hierdurch entgegen der Federkraft die Rampe 21 und über das Scharnier 18' auch das Verschlusselement 17 nach unten gedrückt, wodurch die Austrittsöffnung 16 freigegeben wird. Nach Entnahme des Befestigungselementes 2 aus der Schiene 1 wird durch die Feder 22 das Verschlusselement 17 selbsttätig wieder nach oben gedrückt und die Austrittsöffnung 16 verschlossen. Zum Einsetzen eines Befestigungselementes 2 in die Schiene 1 kann das Verschlusselement 17 von Hand nach unten gedrückt werden.

Figur 8 zeigt schließlich eine weitere Ausführung einer flexiblen Abdekkung 10. welche als Hohlprofil ausgeführt ist. Das Hohlprofil kann ebenfalls an den Fortsätzen 9 der Schiene 1 angeordnet sein. Ist kein Befestigungselement 2 in die Schiene 1 eingesetzt, verschließt das Hohlprofil den Spalt 11 vollständig. Im Bereich eines Befestigungselementes 2 kann das Hohlprofil hingegen zusammengedrückt werden, um das Umgreifen der Schiene 1 durch das Befestigungselement 2 zu ermöglichen. Das Hohlprofil kann beispielsweise als Schaumhohlprofil ausgeführt sein.

Durch die erfindungsgemäße Verwendung eines T-förmigen Profils für die Schiene 1 kann die Bauhöhe der Schiene 1 besonders niedrig gehalten werden, so dass diese besonders einfach in den Laderaum des Kraftfahrzeuges integrierbar ist. Es kann hierbei eine Bauhöhe von weniger als 20 mm erreicht werden. Die Schiene 1 kann hierdurch auf besonders einfache Weise flächenbündig mit den Verkleidungen 12 des Laderaumes in das Fahrzeug eingebaut werden. Durch die flächenbündige Anordnung in Verbindung mit den Abdeckungen 10 kann eine vollständig geschlossene Oberfläche in dem Laderaum erreicht werden, was das Beladen erheblich erleichtert. Zugleich ist die Schiene vor Verschmutzungen geschützt. Ebenso vorteilhaft ist es, dass die Schiene 1 nach oben hin eine geschlossene, vergleichsweise dekorative Oberfläche zeigt, während die Verrastungsöffnungen 7 auf der Unterseite des Querbalkens des T-Profils angeordnet sind. Die Schiene 1 kann zumindest im Bereich Ihrer Lauffläche 5 mit einer dekorativen oder kratzfesten Beschichtung versehen sein. Hierdurch ist auch bei längerem Gebrauch keine optische Beeinträchtigung durch Verkratzen der Schiene zu erwarten. Ebenso ist es möglich, die Oberseite der Schiene 1 optisch an den Innenraum des Fahrzeugs anzupassen.

Die Erfindung ist nicht auf die dargestellten Ausführungsbeispiele beschränkt. Abwandlungen im Rahmen der Patentansprüche fallen ebenfalls unter die Erfindung.

## Patentansprüche

1. Befestigungsschiene (1) zur Halterung und/oder Sicherung von Gegenständen in einem Laderaum eines Kraftfahrzeuges, welche in dem Laderaum ortsfest anordenbar ist und in welcher ein Befestigungselement (2) verschieblich und feststellbar gelagert ist, **dadurch gekennzeichnet, dass** die Schiene (1) ein weitgehend T-förmiges Profil aufweist.

2. Befestigungsschiene nach Anspruch 1, **dadurch gekennzeichnet, dass** die Oberseite eines oberen Querbalkens des T-Profils eine Lauffläche (5) für das Befestigungselement (2) bildet.

3. Befestigungsschiene nach einem der vorherigen Ansprüche, **dadurch gekennzeichnet, dass** die Schiene (1) Verrastungsöffnungen (7) aufweist, in welche ein Sperrelement (8) des Befestigungselementes (2) verrastbar ist.

4. Befestigungsschiene nach einem der vorherigen Ansprüche, **dadurch gekennzeichnet, dass** die Verrastungsöffnungen (7) an dem oberen Querbalken des T-Profils angeordnet sind.

5. Befestigungsschiene nach einem der vorherigen Ansprüche, **dadurch gekennzeichnet, dass** die Verrastungsöffnungen (7) an der der Lauffläche (5) gegenüberliegenden Seite des Querbalkens angeordnet sind.

6. Befestigungsschiene nach einem der vorherigen Ansprüche, **dadurch gekennzeichnet, dass** die Verrastungsöffnungen (7) in einem an der Schiene (1) anordenbaren Lochstreifen (6), vorzugsweise aus Stahl, angeordnet sind.

7. Befestigungsschiene nach einem der vorherigen Ansprüche, **dadurch gekennzeichnet, dass** jeweils zwei Lochstreifen (6) an der Schiene (1) angeordnet sind.

8. Befestigungsschiene nach einem der vorherigen Ansprüche, **dadurch gekennzeichnet, dass** das T-förmige Profil der Schiene (1) ein Aluminium-Profil ist.

9. Befestigungsschiene nach einem der vorherigen Ansprüche, **dadurch gekennzeichnet, dass** das T-förmige Profil der Schiene (1) ein Blechbiegeteil ist.

10. Befestigungsschiene nach einem der vorherigen Ansprüche, **dadurch gekennzeichnet, dass** das T-förmige Profil flächenbündig zu einer Bodenfläche oder Seitenwand des Laderaumes anordenbar ist.

11. Befestigungsschiene nach einem der vorherigen Ansprüche, **dadurch gekennzeichnet, dass** an dem Fuß des T-förmigen Profils Fortsätze (9) angeformt sind.

12. Befestigungsschiene nach einem der vorherigen Ansprüche, **dadurch gekennzeichnet, dass** die Fortsätze (9) rechtwinklig zu dem Fuß des T-förmigen Profils angeordnet sind und eine Auflagefläche für die Schiene (1) bilden.

13. Befestigungsschiene nach einem der vorherigen Ansprüche, **dadurch gekennzeichnet, dass** sich die Fortsätze (9) parallel zum Fuß des T-förmigen Profils nach oben erstrecken.

14. Befestigungsschiene nach einem der vorherigen Ansprüche, **dadurch gekennzeichnet, dass** der Schiene (1) flexible Abdeckungen (10) zugeordnet sind, welche einen Spalt (11) zwischen der Schiene (1) und einer Bodenfläche oder Seitenwand des Laderaumes überdecken.

15. Befestigungsschiene nach einem der vorherigen Ansprüche, **dadurch gekennzeichnet, dass** die Abdeckungen (10) an Fortsätzen (9) des T-förmigen Profils angeordnet sind.

16. Befestigungsschiene nach einem der vorherigen Ansprüche, **dadurch gekennzeichnet, dass** die Schiene (1) wenigstens eine, vorzugsweise an einem Ende der Schiene (1), angeordnete Austrittsöffnung (16) für Befestigungselemente (2) aufweist.

17. Befestigungsschiene nach einem der vorherigen Ansprüche, **dadurch gekennzeichnet, dass** die Schiene (1) mit einer Endkappe (20) versehen ist, in welcher die Austrittsöffnung (16) angeordnet ist.

18. Befestigungsschiene nach einem der vorherigen Ansprüche, **dadurch gekennzeichnet, dass** die Schiene (1) ein Verschlusselement (17) zum Verschließen der Austrittsöffnung (16) aufweist.

19. Befestigungsschiene nach einem der vorherigen Ansprüche, **dadurch gekennzeichnet, dass** das Verschlusselement (17) weitgehend oberflächenbündig mit der Schiene (1) ausgeführt ist.

20. Befestigungsschiene nach einem der vorherigen Ansprüche, **dadurch gekennzeichnet, dass** das Verschlusselement (17) durch ein Scharnier (18) mit der Schiene (1) verbunden ist.

21. Befestigungsschiene nach einem der vorherigen Ansprüche, **dadurch gekennzeichnet, dass** das Verschlusselement (17) als Verzurröse ausgebildet ist.

22. Befestigungsschiene nach einem der vorherigen Ansprüche, **dadurch gekennzeichnet, dass** das Verschlusselement (17) federbelastet an der Schiene (1) angeordnet ist.

23. Befestigungsschiene nach einem der vorherigen Ansprüche, **dadurch gekennzeichnet, dass** das Verschlusselement (17) zur Freigabe der Austrittsöffnung (16) eine Betätigungsvorrichtung (19) aufweist, welche durch das Befestigungselement (2) betätigbar ist.

24. Befestigungsschiene nach einem der vorherigen Ansprüche, **dadurch gekennzeichnet, dass** die Verrastung des Sperrelementes (8) durch Druck auf das Sperrelement (8) und/oder Hochziehen des Sperrelementes (8) lösbar ist.

25. Befestigungsschiene nach einem der vorherigen Ansprüche, **dadurch gekennzeichnet, dass** die Befestigungsschiene (1) Sollknickstellen aufweist, welche insbesondere als Topfbohrungen (15) ausgebildet sind.

26. Befestigungselement (2) zur Halterung und/oder Sicherung von Gegenständen in einem Laderaum eines Kraftfahrzeuges, welches an einer in dem Laderaum ortsfest angeordneten Schiene (1) verschieblich und feststellbar gelagert ist, **dadurch gekennzeichnet, dass** die Schiene (1) ein weitgehend T-förmiges Profil aufweist und das Befestigungselement (2) die Schiene (1) außen umgreift.

27. Befestigungselement (2) nach dem vorherigen Anspruch, **dadurch gekennzeichnet, dass** ein Sperrelement (8) des Befestigungselements (2) die Schiene (1) außen umgreift.
